# EUROPEAN PATENT APPLICATION

(11) **EP 4 583 517 A1**
(43) Date of publication of application: **09.07.2025**
(21) Application number: 23858715.8
(22) Date of filing: 04.05.2023
(51) Int. Cl.: H04N 21/436

(54) **VEHICLE-MOUNTED MULTI-SCREEN INTERACTION METHOD, VEHICLE-MOUNTED CONTROLLER, AUTOMOBILE, AND STORAGE MEDIUM**

(30) Priority: 31.08.2022 CN 202211064227
(71) Applicant: BYD Company Limited, Shenzhen, Guangdong 518118 (CN)
(72) Inventor: ZHANG, Jiande, Shenzhen, Guangdong 518118 (CN); LUO, Yu, Shenzhen, Guangdong 518118 (CN); WEN, Yongsheng, Shenzhen, Guangdong 518118 (CN); LUO, Hua, Shenzhen, Guangdong 518118 (CN); GUAN, Jinchang, Shenzhen, Guangdong 518118 (CN)
(74) Representative: Mathys & Squire
(86) International application number: PCT/CN2023/092078
(87) International publication number: WO 2024/045675

(57) **Abstract**

Disclosed are a vehicle-mounted multi-screen interaction method, a vehicle-mounted controller, an automobile, and a storage medium. The method comprises: displaying a multi-screen interaction interface in response to a multi-screen interaction instruction, the multi-screen interaction interface comprising a sending screen region and a receiving screen region; acquiring an image to be interacted with corresponding to the sending screen region, wherein the image corresponds to an application to be interacted with; and moving the image from the sending screen region to the receiving screen region in response to a moving instruction, so that a vehicle-mounted screen corresponding to the receiving screen region displays, in a mirror imaging mode, the application corresponding to the image. According to the method, the flexibility of a vehicle-mounted multi-screen interaction function can be improved, operation steps of a user are reduced, and the user experience is effectively improved.

## Description

### FIELD

The present disclosure relates to the field of vehicle control technologies, and in particular, to a vehicle-mounted multi-screen interaction method, a vehicle-mounted controller, a vehicle, and a storage medium.

### BACKGROUND

Vehicle-mounted multi-screen interaction refers to sharing, interacting, and entertaining through multiple vehicle-mounted screens when a vehicle is equipped with the multiple screens. When a user initiates a multi-screen interaction function for vehicle-mounted multi-screen interaction in the related art, the interaction can only be initiated based on a currently running program. If the currently running program does not support the initiation of multi-screen interaction, a next operation cannot be performed, which leads to a high complexity of a vehicle-mounted multi-screen interactive operation and negatively impacts user experience.

### SUMMARY

Embodiments of the present disclosure provide a vehicle-mounted multi-screen interaction method, a vehicle-mounted controller, a vehicle, and a storage medium, to solve the problems of complexity and blindness of a vehicle-mounted multi-screen interactive operation in the related art, and to enhance user experience.

An embodiment of the present disclosure provides a vehicle-mounted multi-screen interaction method, including:

A multi-screen interactive interface is displayed in response to a multi-screen interactive instruction, where the multi-screen interactive interface includes a sending screen area and a receiving screen area.

An image to be interacted with corresponding to the sending screen area is acquired, where the image to be interacted with corresponds to an application to be interacted with.

The image to be interacted with is moved from the sending screen area to the receiving screen area in response to a moving instruction, to cause a vehicle-mounted screen corresponding to the receiving screen area to display, in a mirroring manner, the application to be interacted with corresponding to the image to be interacted with.

An embodiment of the present disclosure provides a vehicle-mounted controller, including a memory, a processor, and a computer program stored on the memory and runnable on the processor. The processor, when executing the computer program, implements the above vehicle-mounted multi-screen interaction method.

An embodiment of the present disclosure provides a vehicle, including the vehicle-mounted controller and at least one vehicle-mounted screen connected to the vehicle-mounted controller.

An embodiment of the present disclosure provides a computer-readable storage medium. The computer-readable storage medium stores a computer program, and when the computer program is executed by a processor, the above vehicle-mounted multi-screen interaction method is implemented.

In the above vehicle-mounted multi-screen interaction method, vehicle-mounted controller, vehicle, and storage medium, when vehicle-mounted multi-screen interaction is performed, a multi-screen interactive interface including a sending screen area and a receiving screen area is displayed, an application corresponding to the sending screen area generates an image to be interacted with, and an image to be interacted with is directly moved to the receiving screen area, so as to complete a vehicle-mounted multi-screen interaction function, thereby simplifying the existing complicated and blind multi-screen interactive operation process and improving user experience.

### BRIEF DESCRIPTION OF THE DRAWINGS

In order to describe the technical solutions in the embodiments of the present disclosure more clearly, the accompanying drawings required to describe the embodiments of the present disclosure are briefly described below. Clearly, the accompanying drawings described below show only some embodiments of the present disclosure. Those of ordinary skill in the art may further obtain other accompanying drawings based on these accompanying drawings without creative efforts.
FIG. 1 is a flowchart of a vehicle-mounted multi-screen interaction method according to an embodiment of the present disclosure;
FIG. 2 is a simplified diagram of a multi-screen interactive interface according to an embodiment of the present disclosure;
FIG. 3 is another flowchart of a vehicle-mounted multi-screen interaction method according to an embodiment of the present disclosure;
FIG. 4 is another flowchart of a vehicle-mounted multi-screen interaction method according to an embodiment of the present disclosure;
FIG. 5 is another flowchart of a vehicle-mounted multi-screen interaction method according to an embodiment of the present disclosure;
FIG. 6 is another flowchart of a vehicle-mounted multi-screen interaction method according to an embodiment of the present disclosure;
FIG. 7 is another flowchart of a vehicle-mounted multi-screen interaction method according to an embodiment of the present disclosure; and
FIG. 8 is another flowchart of a vehicle-mounted multi-screen interaction method according to an embodiment of the present disclosure.

### DETAILED DESCRIPTION

The following clearly and completely describes the technical solutions in the embodiments of the present disclosure with reference to the accompanying drawings in the embodiments of the present disclosure. Clearly, the described embodiments are some of the embodiments of the present disclosure rather than all of the embodiments. All other embodiments obtained by those of ordinary skill in the art based on the embodiments of the present disclosure without creative efforts shall fall within the protection scope of the present disclosure.

An embodiment of the present disclosure provides a vehicle-mounted multi-screen interaction method. The vehicle-mounted multi-screen interaction method can be applied to a vehicle-mounted controller. The vehicle-mounted controller refers to a controller mounted on a vehicle, and may be an existing controller on the vehicle or an independently controlled controller, provided that the controller can implement the vehicle-mounted multi-screen interaction method.

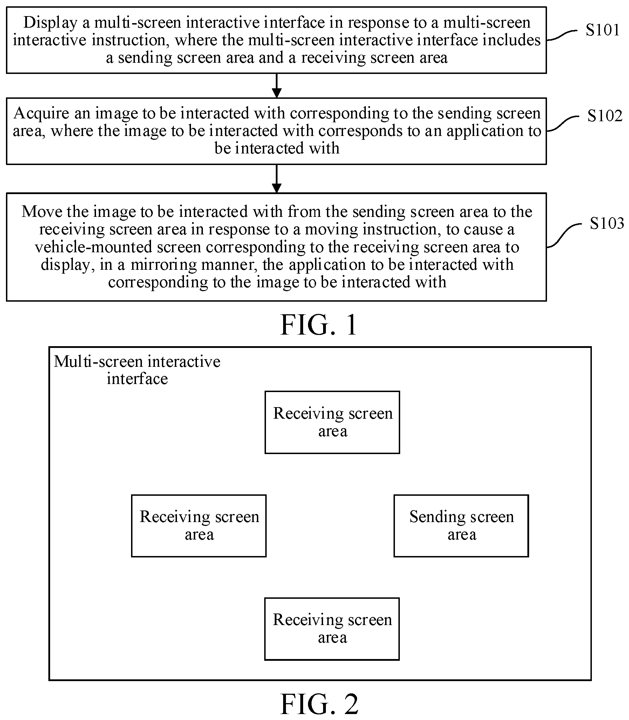

In an embodiment, as shown in FIG. 1, a vehicle-mounted multi-screen interaction method is provided. The application of the method to a vehicle-mounted controller is taken as an example for explanation. The method includes the following steps:
S101: A multi-screen interactive interface is displayed in response to a multi-screen interactive instruction, where the multi-screen interactive interface includes a sending screen area and a receiving screen area.
S102: An image to be interacted with corresponding to the sending screen area is acquired, where the image to be interacted with corresponds to an application to be interacted with.
S103: The image to be interacted with is moved from the sending screen area to the receiving screen area in response to a moving instruction, to cause a vehicle-mounted screen corresponding to the receiving screen area to display, in a mirroring manner, the application to be interacted with corresponding to the image to be interacted with.

The multi-screen interactive instruction is an instruction for initiating a multi-screen interaction function.

As an example, in step S101, the vehicle-mounted controller may receive a multi-screen interactive instruction triggered by a user, and display a multi-screen interactive interface in response to the multi-screen interactive instruction, the multi-screen interactive interface including a sending screen area and a receiving screen area. Specifically, the vehicle-mounted controller can respond to a multi-screen interactive instruction triggered by an operation of the user on any vehicle-mounted screen. In this example, when vehicle-mounted screens are in an on state, the user can click on a multi-screen interactive port on any vehicle-mounted screen, to cause the vehicle-mounted controller to respond to a multi-screen interactive instruction corresponding to the multi-screen interactive port, so as to enable the multi-screen interaction function.

Further, a multi-screen interactive port is arranged on a vehicle-mounted navigation bar of the vehicle-mounted screen, and a multi-screen interactive instruction is triggered through the multi-screen interactive port arranged on the vehicle-mounted navigation bar. Since the multi-screen interactive port on the vehicle-mounted navigation bar is not susceptible to hiding, the user can easily enable the multi-screen interaction function when switching different application interfaces, so as to facilitate an operation by the user and reduce the operation complexity and blindness. In this example, the multi-screen interactive port on the vehicle-mounted navigation bar may be a button, or a port that can trigger a multi-screen interactive instruction, such as a touch screen in a designated area.

The multi-screen interactive interface is an interface for the user to implement the multi-screen interaction function.

In this example, after receiving a multi-screen interactive instruction, the vehicle-mounted controller displays a multi-screen interactive interface in response to the multi-screen interactive instruction, and the multi-screen interactive interface includes a sending screen area and a receiving screen area, as shown in FIG. 2. In this example, the sending screen area is a screen area corresponding to the multi-screen interaction function that the current user needs to initiate, and the number of sending screen areas may be set to one. The receiving screen area is a screen area that receives the multi-screen interaction function initiated by the current user, and the number of receiving screen areas may be set in the multi-screen interactive interface to one or more, and can be predetermined in the vehicle-mounted controller.

The image to be interacted with refers to an image that needs interaction, and is specifically represented as an image of an application that needs interaction. The application to be interacted with refers to an application that needs interaction, that is, an application that needs to interact with another vehicle-mounted screen by the user.

As an example, in step S102, after displaying the multi-screen interactive interface, the vehicle-mounted controller needs to first determine an image to be interacted with corresponding to the sending screen area, and the image to be interacted with can be understood as an image that needs to interact with another vehicle-mounted screen. The image to be interacted with may be used to represent an application to be interacted with, that is, there is a one-to-one correspondence relationship between the image to be interacted with and the application to be interacted with. In this example, the image to be interacted with may be a screenshot of a current interface of an application to be interacted with, or an image containing key information of an application to be interacted with.

As an example, in step S103, after determining the image to be interacted with in the sending screen area, the vehicle-mounted controller moves the image to be interacted with from the sending screen area to the receiving screen area in response to a moving instruction, to cause a vehicle-mounted screen corresponding to the receiving screen area to display, in a mirroring manner, the application to be interacted with corresponding to the image to be interacted with. That is, when the user operates on the multi-screen interactive interface, the vehicle-mounted controller can receive a moving instruction, move the image to be interacted with from the sending screen area to the receiving screen area in response to the moving instruction, and use a screen mirroring technology to cause a vehicle-mounted screen corresponding to the receiving screen area to display, in a mirroring mode, the same content as that displayed on the vehicle-mounted screen corresponding to the sending screen area, that is, the application to be interacted with corresponding to the image to be interacted with.

In this embodiment, the multi-screen interactive interface including the sending screen area and the receiving screen area is displayed, the image to be interacted with that is formed in the sending screen area is moved from the sending screen area to the receiving screen area, and the screen mirroring technology is used to cause the vehicle-mounted screen corresponding to the receiving screen area to display, in the mirroring manner, the application to be interacted with corresponding to the image to be interacted with, so as to complete the vehicle-mounted multi-screen interaction function, thereby reducing the complexity and blindness of the multi-screen interactive operation process, and improving user experience.

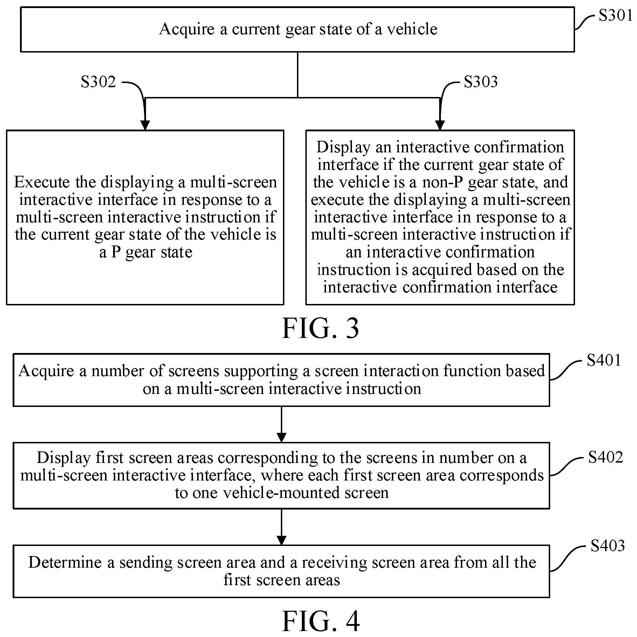

In an embodiment, as shown in FIG. 3, after step S101, that is, after a multi-screen interactive interface is displayed in response to a multi-screen interactive instruction, the vehicle-mounted multi-screen interaction method further includes:
S301: A current gear state of a vehicle is acquired.
S302: That a multi-screen interactive interface is displayed in response to a multi-screen interactive instruction is executed if the current gear state of the vehicle is a P gear state.
S303: An interactive confirmation interface is displayed if the current gear state of the vehicle is a non-P gear state, and that a multi-screen interactive interface is displayed in response to a multi-screen interactive instruction is executed if an interactive confirmation instruction is acquired based on the interactive confirmation interface.

The current gear state of the vehicle refers to a state of a gear that the vehicle is currently in.

As an example, in step S301, the vehicle-mounted controller can acquire the current gear state of the vehicle by a bus or other means, so as to evaluate whether the multi-screen interaction function can be implemented based on the current gear state of the vehicle.

As an example, in step S302, when the current gear state of the vehicle is a P gear state, the vehicle-mounted controller indicates that the vehicle is currently in a neutral or shut-down state. In this case, the multi-screen interaction function is executed without affecting driving safety of the vehicle, and in this case, the multi-screen interaction function can be directly performed, that is, that a multi-screen interactive interface is displayed in response to a multi-screen interactive instruction is executed.

The interactive confirmation interface is an interface used for the user to confirm whether multi-screen interaction is needed. The interactive confirmation instruction is an instruction for the user to confirm the need to perform multi-screen interaction.

As an example, in step S303, when the current gear state of the vehicle is a non-P gear state, that is, the vehicle is currently neither in a neutral state nor in a shut-down state, if the vehicle-mounted controller executes the multi-screen interaction function, the vehicle-mounted screen corresponding to the receiving screen area may be caused to immediately synchronize an interactive application mirroring interface. This may result in the inability to meet safety requirements of a central control platform in a non-P gear state. Therefore, the interactive confirmation interface needs to be displayed first. If the vehicle-mounted controller can respond to the interactive confirmation instruction determined based on the interactive confirmation interface, that a multi-screen interactive interface is displayed in response to a multi-screen interactive instruction is executed to ensure safety of the multi-screen interaction function.

In this embodiment, after the response to the multi-screen interactive instruction, it is first determined whether to support the multi-screen interaction function based on whether the current gear state of the vehicle is in a P gear state. This effectively solves the problem that the vehicle-mounted screens are disturbed due to the multi-screen interaction function when the user is driving, and ensures the driving safety of the user.

In an embodiment, as shown in FIG. 4, step S101, that is, a multi-screen interactive interface is displayed in response to a multi-screen interactive instruction, the multi-screen interactive interface including a sending screen area and a receiving screen area, includes:
S401: A number of screens supporting a screen interaction function is acquired based on the multi-screen interactive instruction.
S402: First screen areas corresponding to the screens in number are displayed on the multi-screen interactive interface, where each first screen area corresponds to one vehicle-mounted screen.
S403: The sending screen area and the receiving screen area are determined from all the first screen areas.

The number of screens supporting the screen interaction function refers to the number of all vehicle-mounted screens supporting the screen interaction function in the vehicle.

As an example, in step S401, after receiving the multi-screen interactive instruction, the vehicle-mounted controller can acquire a predetermined corresponding number of all vehicle-mounted screens that can support the screen interaction function, and can also detect and identify a corresponding number of all vehicle-mounted screens currently in a power-on state that support the screen interaction function. Optionally, the number of vehicle-mounted screens may be set to no more than 7, so as to achieve a clearer display effect of the multi-screen interactive interface.

The first screen area is a screen area that can support interaction on the multi-screen interactive interface, and is a screen area for the user to perform an interactive operation.

As an example, in step S402, after acquiring the number of screens supporting the screen interaction function, the vehicle-mounted controller displays first screen areas corresponding to the screens in number on the multi-screen interactive interface, to cause each first screen area to correspond to one vehicle-mounted area. That is, the first screen areas corresponding to all vehicle-mounted screens that can support the screen interaction function are displayed on the multi-screen interactive interface for the user to select and determine the sending screen area and the receiving screen area from all the first screen areas.

The sending screen area refers to a screen area corresponding to the multi-screen interaction function that the current user needs to initiate. The receiving screen area is a screen area that receives the multi-screen interaction function initiated by the current user.

As an example, in step S403, after controlling the multi-screen interactive interface to display all the first screen areas corresponding to all the vehicle-mounted screens that can support the screen interaction function, the vehicle-mounted controller can select the sending screen area and the receiving screen area from all the first screen areas based on a selection operation by the user. For example, the number of sending screen areas may be one, and the number of receiving screen areas may be one or more.

Further, if the number of receiving screen areas in the multi-screen interactive interface is multiple, after moving an image to be interacted with from the sending screen area to a designated receiving screen area, the user can continue to move the image to be interacted with to other receiving screen areas, so that vehicle-mounted screens corresponding to multiple receiving screen areas can display, in an mirroring manner, content of the vehicle-mounted screen corresponding to the sending screen area, thereby implementing multi-screen interaction.

In this embodiment, the first screen areas corresponding to all the vehicle-mounted screens supporting the screen interaction function are displayed on the multi-screen interactive interface, so that the user can conveniently determine the sending screen area and the receiving screen area from all the first screen areas, thereby improving convenience of the multi-screen interaction function operation and facilitating the multi-screen interactive operation by the user.

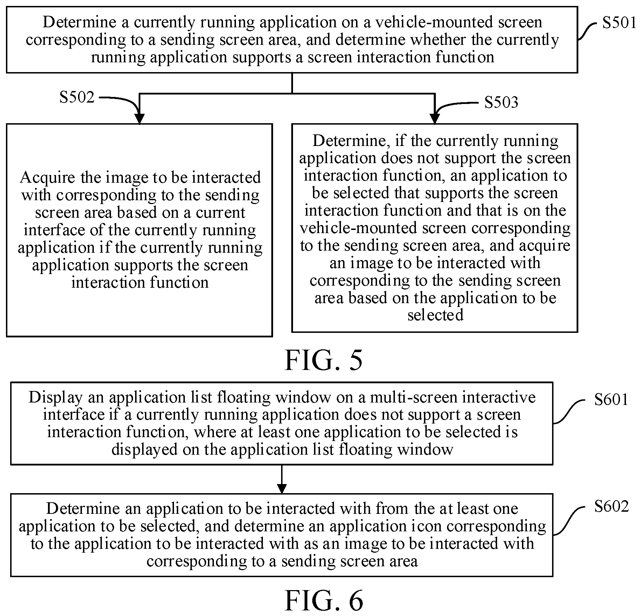

In an embodiment, as shown in FIG. 5, step S102, that is, an image to be interacted with corresponding to the sending screen area is acquired, includes:
S501: A currently running application on a vehicle-mounted screen corresponding to the sending screen area is determined, and it is determined whether the currently running application supports a screen interaction function.
S502: The image to be interacted with corresponding to the sending screen area is acquired based on a current interface of the currently running application if the currently running application supports the screen interaction function.
S503: If the currently running application does not support the screen interaction function, an application to be selected that supports the screen interaction function and that is on the vehicle-mounted screen corresponding to the sending screen area is determined, and the image to be interacted with corresponding to the sending screen area is acquired based on the application to be selected.

The currently running application refers to an application that is running on the vehicle-mounted screen corresponding to the sending screen area, that is, an application that the user needs for multi-screen interaction.

As an example, in step S501, the vehicle-mounted controller needs to identify the currently running application on the vehicle-mounted screen corresponding to the sending screen area, determine whether the application supports the screen interaction function, and execute a corresponding program based on a determining result.

The image to be interacted with refers to an image that needs interaction, and is specifically represented as an image of an application that needs interaction. The image to be interacted with may be a screenshot of a current interface of the application to be interacted with, or an image containing key information of the application to be interacted with.

As an example, in step S502, if the vehicle-mounted controller determines that the currently running application supports the screen interaction function after identifying the currently running application on the vehicle-mounted screen corresponding to the sending screen area, a screenshot of the current interface of the currently running application is generated based on the current interface of the currently running application, and the screenshot is determined as the image to be interacted with; or an image containing the key information of the currently running application is acquired, and the image containing the key information is determined as the image to be interacted with.

The application to be selected is an application for the user to select.

As an example, in step S503, if the vehicle-mounted controller determines that the currently running application does not support the screen interaction function after identifying the currently running application on the vehicle-mounted screen corresponding to the sending screen area, all applications to be selected that support the screen interaction function on the vehicle-mounted screen corresponding to the sending screen area are identified, and an application to be selected that needs to perform the screen interaction function is determined therefrom. Then, a screenshot of a current interface of the application to be selected can be generated based on the current interface of the application to be selected, and the screenshot can be determined as an image to be interacted with; or an image containing key information of the application to be selected is generated, and the image containing the key information is determined as an image to be interacted with; or an application icon of the application to be selected is directly determined as an image to be interacted with.

In this embodiment, whether the currently running application supports the screen interaction function is identified, to determine whether to invoke another application to be selected that supports the screen interaction function. This solves the problem that the user needs to blindly try to open other applications when the currently running application does not support the screen interaction function, making the multi-screen interaction function more friendly and improving convenience of using the multi-screen interaction function by the user.

In an embodiment, as shown in FIG. 6, step S503, that is, if the currently running application does not support the screen interaction function, an application to be selected that supports the screen interaction function and that is on the vehicle-mounted screen corresponding to the sending screen area is determined, and the image to be interacted with corresponding to the sending screen area is acquired based on the application to be selected, includes:
S601: An application list floating window is displayed on the multi-screen interactive interface if the currently running application does not support the screen interaction function, at least one application to be selected being displayed on the application list floating window.
S602: The application to be interacted with is determined from the at least one application to be selected, and an application icon corresponding to the application to be interacted with is determined as the image to be interacted with corresponding to the sending screen area.

The application list floating window is a list floating window used to display applications, and may be specifically a list floating window displaying all applications that support the screen interaction function. Further, the application list floating window may be a list floating window displaying all applications that support the screen interaction function in an open state, or may be a list floating window displaying all applications that support the screen interaction function in an open state or a non-open state.

As an example, in step S601, after identifying that the currently running application on the vehicle-mounted screen corresponding to the sending screen area does not support the screen interaction function, the vehicle-mounted controller displays an application list floating window of all applications supporting the screen interaction function on the multi-screen interactive interface, so that the user can determine an application to be selected from the application list floating window. Optionally, the application list floating window horizontally displays all different types of applications to be selected that support the screen interaction function, and supports selection of different applications to be selected by gliding left and right; and the application list floating window vertically displays different types of applications to be selected that support the screen interaction function, and supports selection of different types of applications to be selected by gliding up and down.

As an example, in step S602, after displaying the application list floating window, the vehicle-mounted controller determines, from the application list floating window, an application to be interacted with that needs to perform screen interaction, and determines an application icon of the application to be interacted with as an image to be interacted with in the sending screen area.

In this embodiment, when the currently running application does not support the screen interaction function, other applications to be selected that can support the screen interaction function are displayed through the application list floating window, so that the user can conveniently select an application to be selected that needs interaction, and the operation complexity is reduced.

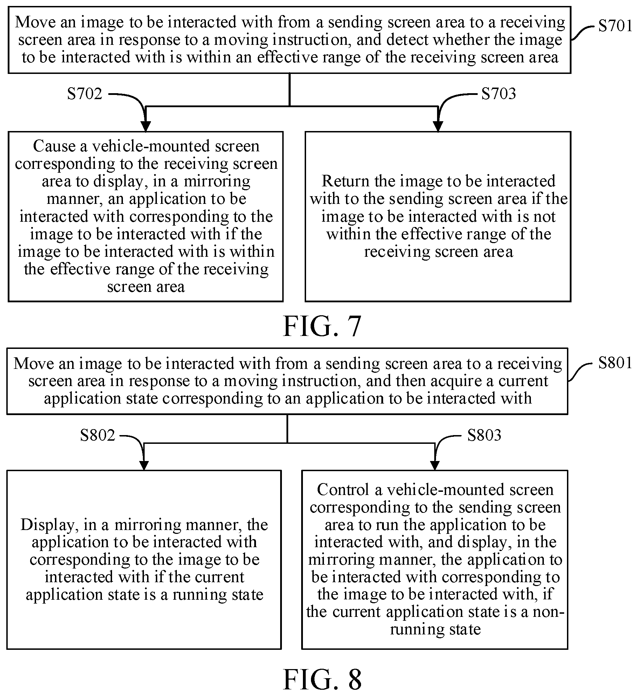

In an embodiment, as shown in FIG. 7, step S103, that is, the image to be interacted with is moved from the sending screen area to the receiving screen area in response to a moving instruction, to cause a vehicle-mounted screen corresponding to the receiving screen area to display, in a mirroring manner, the application to be interacted with corresponding to the image to be interacted with, includes:
S701: The image to be interacted with is moved from the sending screen area to the receiving screen area in response to the moving instruction, and it is detected whether the image to be interacted with is within an effective range of the receiving screen area.
S702: The vehicle-mounted screen corresponding to the receiving screen area displays, in the mirroring manner, the application to be interacted with corresponding to the image to be interacted with if the image to be interacted with is within the effective range of the receiving screen area.
S703: The image to be interacted with is returned to the sending screen area if the image to be interacted with is not within the effective range of the receiving screen area.

The effective range of the receiving screen area refers to an area that is in the receiving screen area and that can be effectively associated with a vehicle-mounted screen corresponding to the receiving screen area. That is, the effective range of the receiving screen area is where an image to be interacted with can be effectively recognized, and the vehicle-mounted screen corresponding to the receiving screen area can be triggered to implement the multi-screen interaction function. The effective range can be predetermined in the vehicle-mounted controller.

As an example, in step S701, when the vehicle-mounted controller moves the image to be interacted with from the sending screen area to the receiving screen area by dragging or other means in response to a moving instruction after acquiring the image to be interacted with, the vehicle-mounted controller determines whether the image to be interacted with is within the effective range of the receiving screen area and makes a corresponding response based on a determining result.

As an example, in step S702, after determining that the image to be interacted with is within the effective range of the receiving screen area, the vehicle-mounted controller can effectively identify the image to be interacted with, and can send, through a communication mechanism in the vehicle, an instruction to be interacted with to the vehicle-mounted screen corresponding to the receiving screen area. Based on the instruction to be interacted with, the vehicle-mounted screen corresponding to the receiving screen area displays, in a mirroring manner, the application to be interacted with corresponding to the image to be interacted with.

As an example, in step S703, when the vehicle-mounted controller determines that the image to be interacted with is not within the effective range of the receiving screen area, that is, the image to be interacted with cannot be identified, no instruction to be interacted with can be triggered, and the vehicle-mounted screen corresponding to the receiving screen area acquires no instruction to be interacted with, the vehicle-mounted screen corresponding to the receiving screen area cannot display, in a mirroring manner, the application to be interacted with corresponding to the image to be interacted with. In this case, the receiving screen area cannot effectively identify the image to be interacted with, and the image to be interacted with is automatically returned to the sending screen area to remind the user that the current multi-screen interaction function is not implemented.

In this embodiment, it is detected whether the image to be interacted with is within the effective range of the receiving screen area, to inform the user whether the application to be interacted with implements screen interaction, so that the user can perform an adjustment in time based on an actual situation, thereby greatly improving convenience of using multi-screen interaction by the user.

In an embodiment, as shown in FIG. 8, step S104, that is, the image to be interacted with is moved from the sending screen area to the receiving screen area in response to a moving instruction, to cause a vehicle-mounted screen corresponding to the receiving screen area to display, in a mirroring manner, the application to be interacted with corresponding to the image to be interacted with, includes:
S801: The image to be interacted with is moved from the sending screen area to the receiving screen area in response to the moving instruction, and then a current application state corresponding to the application to be interacted with is acquired.
S802: The application to be interacted with corresponding to the image to be interacted with is displayed in a mirroring manner if the current application state is a running state.
S803: The vehicle-mounted screen corresponding to the sending screen area is controlled to run the application to be interacted with, and the application to be interacted with corresponding to the image to be interacted with is displayed in the mirroring manner, if the current application state is a non-running state.

The current application state refers to a state of a current application in a vehicle-mounted screen, including a running state and a non-running state.

As an example, in step S801, after moving the image to be interacted with from the sending screen area to the receiving screen area in response to the moving instruction, the vehicle-mounted controller needs to identify the current application state in the vehicle-mounted screen corresponding to the application to be interacted with in the sending screen area, and make a corresponding response based on an identification result.

As an example, in step S802, if the vehicle-mounted controller identifies that the current application state corresponding to the application to be interacted with is a running state, the vehicle-mounted controller can cause the vehicle-mounted screen corresponding to the receiving screen area to directly display, in a mirroring manner, the application to be interacted with corresponding to the image to be interacted with.

As an example, in step S803, if the vehicle-mounted controller identifies that the current application state corresponding to the application to be interacted with is a non-running state, the vehicle-mounted controller opens the application to be interacted with in the vehicle-mounted screen corresponding to the sending screen area, and then causes the vehicle-mounted screen corresponding to the receiving screen area to display, in a mirroring manner, the application to be interacted with corresponding to the image to be interacted with.

In this embodiment, it is determined whether the current application state is a running state, and if the current application state is a non-running state, the vehicle-mounted screen corresponding to the sending screen area is controlled to automatically run the application to be interacted with, so that the vehicle-mounted controller automatically opens a non-running application, thereby reducing the complexity of user operation, and improving convenience of using multi-screen interaction by the user.

It should be understood that values of sequence numbers of the steps in the above embodiments do not imply the order of execution. The order of performing the processes should be determined based on their function and internal logic, and should not constitute a limitation to the implementation process of the embodiments of the present disclosure.

In an embodiment, a vehicle-mounted controller is provided, including a memory, a processor, and a computer program stored on the memory and runnable on the processor. The processor, when executing the computer program, implements the vehicle-mounted multi-screen interaction method in the above embodiments, such as steps S101 to S103 shown in FIG. 1, or as shown in FIG. 3 to FIG. 8. To avoid repetition, details are not repeated here.

In an embodiment, a vehicle is provided, including the vehicle-mounted controller in the above embodiment. The vehicle-mounted controller can perform the vehicle-mounted multi-screen interaction method in the above embodiments, such as steps S101 to S103 shown in FIG. 1, or as shown in FIG. 3 to FIG. 8. To avoid repetition, details are not repeated here.

In an embodiment, a computer-readable storage medium is provided. The computer-readable storage medium stores a computer program, and when the computer program is executed by a processor, the vehicle-mounted multi-screen interaction method in the above embodiments, such as steps S101 to S103 shown in FIG. 1, or as shown in FIG. 3 to FIG. 8, is implemented. To avoid repetition, details are not repeated here.

Those of ordinary skill in the art may understand that all or some of the processes in the method of the above embodiments may be completed by a computer program instructing related hardware. The computer program may be stored in a nonvolatile computer-readable storage medium. The computer program, when executed, may include processes of the embodiments of the methods described above. Any reference to a memory, a storage, a database, or other media used in each embodiment of the present disclosure may include a nonvolatile memory and/or a volatile memory. The nonvolatile memory may include a read-only memory (ROM), a programmable ROM (PROM), an electrically programmable ROM (EPROM), an electrically erasable programmable ROM (EEPROM), or a flash memory. The volatile memory may include a random access memory (RAM) or an external cache. By way of description rather than limitation, the RAM may be obtained in multiple forms, such as a static RAM (SRAM), a dynamic RAM (DRAM), a synchronous DRAM (SDRAM), a double data rate SDRAM (DDRSDRAM), an enhanced SDRAM (ESDRAM), a synchlink DRAM (SLDRAM), a Rambus direct RAM (RDRAM), a direct Rambus dynamic RAM (DRDRAM), and a Rambus dynamic RAM (RDRAM).

Those skilled in the art may clearly understand that, for ease and conciseness of description, only division of the foregoing functional units and modules is used as an example. In practical applications, the foregoing functions may be allocated to and completed by different functional units and modules as required, that is, the internal structure of the apparatus is divided into different functional units or modules to complete all or some of the foregoing functions.

The above embodiments are merely used for describing the technical solutions of the present disclosure, but are not intended to limit the present disclosure. Although the present disclosure is described in detail with reference to the foregoing embodiments, it should be appreciated by those of ordinary skill in the art that, the technical solutions described in the foregoing embodiments may still be modified, or some of the technical features therein may be equivalently substituted. These modifications or substitutions do not make the essence of the corresponding technical solutions deviate from the spirit and scope of the technical solutions of various embodiments of the present disclosure, and should fall within the protection scope of the present disclosure.

## Claims

1. A vehicle-mounted multi-screen interaction method, comprising:
displaying a multi-screen interactive interface in response to a multi-screen interactive instruction, the multi-screen interactive interface comprising a sending screen area and a receiving screen area;
acquiring an image to be interacted with corresponding to the sending screen area, the image to be interacted with corresponding to an application to be interacted with; and
moving the image to be interacted with from the sending screen area to the receiving screen area in response to a moving instruction, to cause a vehicle-mounted screen corresponding to the receiving screen area to display, in a mirroring manner, the application to be interacted with corresponding to the image to be interacted with.

2. The vehicle-mounted multi-screen interaction method according to claim 1, further comprising:
acquiring a current gear state of a vehicle; and
executing the displaying a multi-screen interactive interface in response to the multi-screen interactive instruction if the current gear state of the vehicle is a P gear state; or
displaying an interactive confirmation interface if the current gear state of the vehicle is a non-P gear state, and executing the displaying a multi-screen interactive interface in response to the multi-screen interactive instruction if an interactive confirmation instruction is acquired based on the interactive confirmation interface.

3. The vehicle-mounted multi-screen interaction method according to claim 1, wherein displaying the multi-screen interactive interface in response to the multi-screen interactive instruction, the multi-screen interactive interface comprising the sending screen area and the receiving screen area comprises:
acquiring a number of screens supporting a screen interaction function based on the multi-screen interactive instruction;
displaying first screen areas corresponding to the screens in number on the multi-screen interactive interface, each first screen area corresponding to one vehicle-mounted screen; and
determining the sending screen area and the receiving screen area from all the first screen areas.

4. The vehicle-mounted multi-screen interaction method according to claim 1, wherein acquiring the image to be interacted with corresponding to the sending screen area comprises:
determining a currently running application on a vehicle-mounted screen corresponding to the sending screen area, and determining whether the currently running application supports a screen interaction function; and
acquiring the image to be interacted with corresponding to the sending screen area based on a current interface of the currently running application if the currently running application supports the screen interaction function; or
determining, if the currently running application does not support the screen interaction function, an application to be selected that supports the screen interaction function and that is on the vehicle-mounted screen corresponding to the sending screen area, and acquiring the image to be interacted with corresponding to the sending screen area based on the application to be selected.

5. The vehicle-mounted multi-screen interaction method according to claim 4, wherein determining, if the currently running application does not support the screen interaction function, the application to be selected that supports the screen interaction function and that is on the vehicle-mounted screen corresponding to the sending screen area, and acquiring the image to be interacted with corresponding to the sending screen area based on the application to be selected comprises:
displaying an application list floating window on the multi-screen interactive interface if the currently running application does not support the screen interaction function, at least one application to be selected being displayed on the application list floating window; and
determining the application to be interacted with from the at least one application to be selected, and determining an application icon corresponding to the application to be interacted with as the image to be interacted with corresponding to the sending screen area.

6. The vehicle-mounted multi-screen interaction method according to any one of claims 1 to 5, wherein moving the image to be interacted with from the sending screen area to the receiving screen area in response to the moving instruction, to cause the vehicle-mounted screen corresponding to the receiving screen area to display, in the mirroring manner, the application to be interacted with corresponding to the image to be interacted with comprises:
moving the image to be interacted with from the sending screen area to the receiving screen area in response to the moving instruction, and detecting whether the image to be interacted with is within an effective range of the receiving screen area; and
causing the vehicle-mounted screen corresponding to the receiving screen area to display, in the mirroring manner, the application to be interacted with corresponding to the image to be interacted with if the image to be interacted with is within the effective range of the receiving screen area; or
returning the image to be interacted with to the sending screen area if the image to be interacted with is not within the effective range of the receiving screen area.

7. The vehicle-mounted multi-screen interaction method according to any one of claims 1 to 6, wherein moving the image to be interacted with from the sending screen area to the receiving screen area in response to the moving instruction, to cause the vehicle-mounted screen corresponding to the receiving screen area to display, in the mirroring manner, the application to be interacted with corresponding to the image to be interacted with comprises:
moving the image to be interacted with from the sending screen area to the receiving screen area in response to the moving instruction, and then acquiring a current application state corresponding to the application to be interacted with; and
displaying, in the mirroring manner, the application to be interacted with corresponding to the image to be interacted with if the current application state is a running state; or
controlling the vehicle-mounted screen corresponding to the sending screen area to run the application to be interacted with, and displaying, in the mirroring manner, the application to be interacted with corresponding to the image to be interacted with, if the current application state is a non-running state.

8. A vehicle-mounted controller, comprising a memory, a processor, and a computer program stored on the memory and runnable on the processor, the processor, when executing the computer program, implementing the vehicle-mounted multi-screen interaction method according to any one of claims 1 to 7.

9. A vehicle, comprising the vehicle-mounted controller according to claim 8 and at least one vehicle-mounted screen connected to the vehicle-mounted controller.

10. A computer-readable storage medium, the computer-readable storage medium storing a computer program, and when the computer program is executed by a processor, the vehicle-mounted multi-screen interaction method according to any one of claims 1 to 7 being implemented.
